# EUROPEAN PATENT SPECIFICATION

(11) **EP 0 655 686 B1**
(45) Date of publication and mention of the grant of the patent: **29.04.1998**
(21) Application number: 94306880.9
(22) Date of filing: 20.09.1994
(51) Int. Cl.: G06F 11/14

(54) **Retry control method and device for control processor**
Wiederholungssteuerverfahren und -einrichtung für einen Steuerprozessor
Procédé et dispositif de commande de reattempt pour un processeur de commande

(30) Priority: 30.11.1993 JP 300671/93
(43) Date of publication of application: 31.05.1995
(73) Proprietor: FUJITSU LIMITED, Kawasaki-shi, Kanagawa 211 (JP)
(72) Inventor: Matsuzaki, Shigeharu, c/o Fujitsu Limited, Kawasaki-shi, Kanagawa 211 (JP); Yamashita, Hideo, c/o Fujitsu Limited, Kawasaki-shi, Kanagawa 211 (JP)
(74) Representative: Billington, Lawrence Emlyn

(56) References cited:
- US-A- 4 800 563
- PATENT ABSTRACTS OF JAPAN vol. 17, no. 87 (P-1491) 22 February 1993 & JP-A-04 287 237 (HITACHI LTD) 12 October 1992
- PATENT ABSTRACTS OF JAPAN vol. 16, no. 89 (P-1320) 4 March 1992 & JP-A-03 271 952 (NEC CORP) 3 December 1991

## Description

The present invention relates to a retry method and device for a control processor included in an instruction processing apparatus.

Rapid advances in information processing techniques in recent years have made a variety of information processing services available. This has resulted in increasing needs for improvement in a RAS (reliability, availability and serviceability) function of information processing apparatus as well as improvement in the processing speed.

In order to achieve RAS, methods such as parity check on data, ECC (error check and correction) on a CS (control storage), instruction retries in the case of an error are employed.

There is a previously proposed information processing apparatus wherein a control processor to be exclusively used for executing the above-described RAS function is provided in addition to a function circuit for executing predetermined instructions and wherein the control processor is controlled using microcodes.

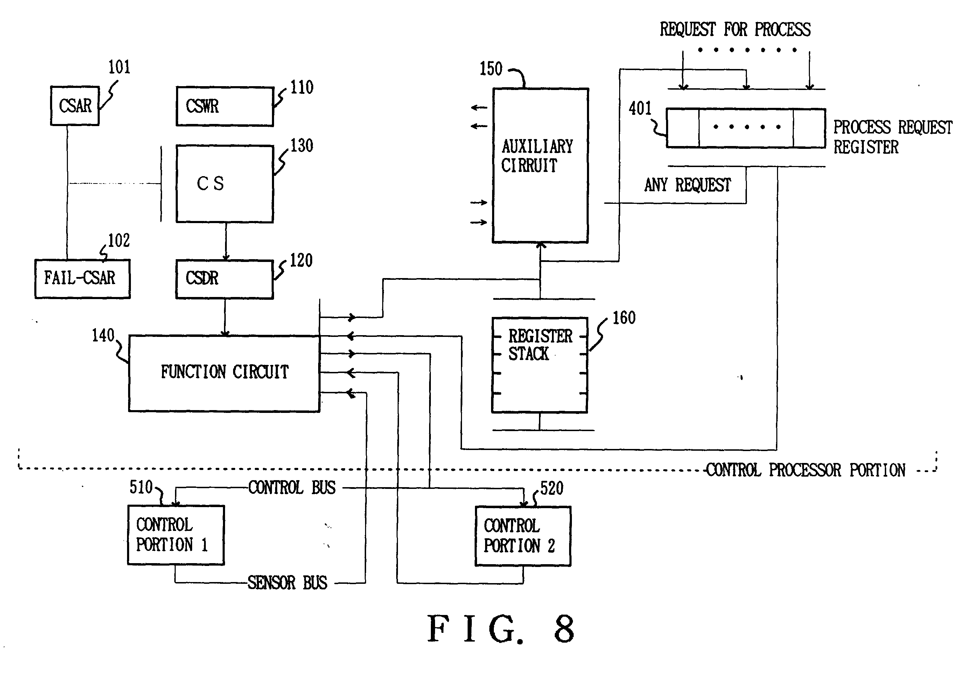

The use of a control processor has an advantage in that the circuit configurations of an interface circuit and a control portion can be simplified by providing a control bus for transferring commands and data between the control processor and the control portions subordinate to the control processor and by providing a sense bus for sensing the data in the control portion (see Fig. 8).

Further, by controlling the control processor using microcodes, advanced functions can be simply achieved by controlling the control processor using microcodes, and alterations and additions to the functions thereof can be flexibly made. In addition, it is possibly to easily confirm whether the control processor and the control portions subordinate thereto are functioning properly by the use of microcodes for diagnosis.

To achieve the RAS function using the above-described control processor, high reliability is required also for the control processor.

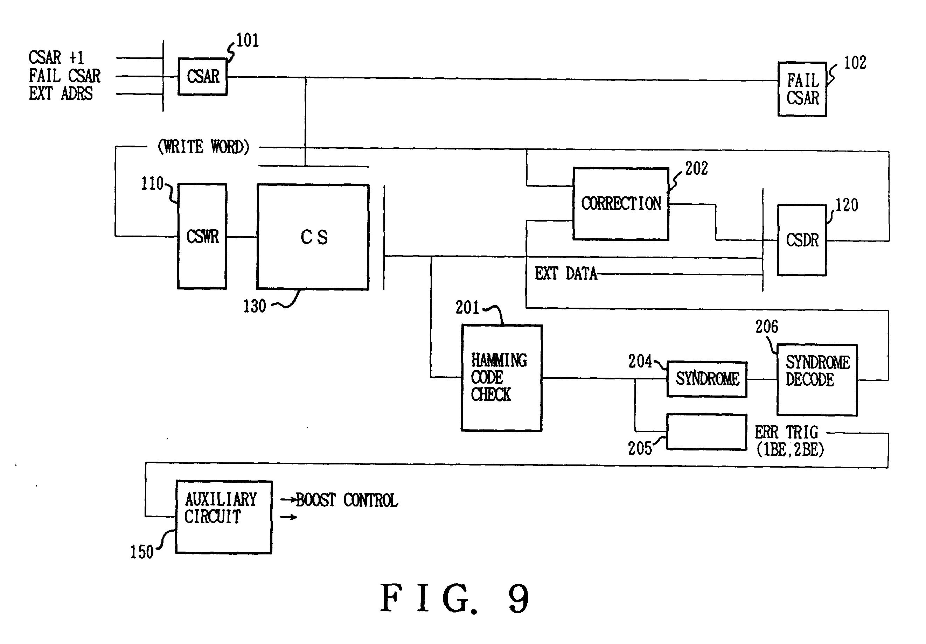

An example of a recovery circuit in a previously proposed processor is shown in Fig. 9.

In the figure, a Hamming code check portion 201 is used as an error detection means in a control storage (CS) 130. The Hamming code check portion 201 detects one-bit errors and two-bit errors in one word.

The Hamming code check portion 201 analyzes data output by the control storage portion (CS) 130 word by word to determine whether there is a bit error or not.

If the Hamming code check portion 201 detects a one-bit error, an error trigger circuit (ERR TRIG) 205 informs an auxiliary circuit 150 of the detection of an error. The auxiliary circuit 150 inhibits acceptance of interrupt control and the like and controls the operations of various portions of the control processor to inhibit readout from the control storage (CS) 130.

At this time, a FAIL address register 102 stores the address of the error detected by the Hamming code check circuit 201, and a CS read register 120 stores the error word including the error detected.

In the case of a one-bit error, the following operation will be performed under control of the auxiliary circuit 150.

A syndrome analysis portion 206 performs syndrome analysis on the word including the error detected by the Hamming code check circuit 201 based on a syndrome 204 which is the syndrome encountered when the error was detected to identify the position of the error bit.

Next, a one-bit error correction circuit 202 corrects the error word stored in the CS read register 120 based on the information on the position of the error bit supplied by the syndrome analysis portion 206. The corrected word is then reset in the CS read register 120 through word selector 203. Then, the error address stored in the FAIL address register 102 is set in a CS address register 101, and the corrected word in the CS read register 120 is rewritten in the address where the error has occurred in the control storage (CS) 130 through a control storage write register (CSWR) 110 as correct data. When this rewriting process is complete, reading into the CS read register 120 is resumed starting with the address in the control storage (CS) 130 where the error has been detected.

When a two-bit error is detected, the error correcting operation is not performed and information on the occurrence of the error is sent to other processing systems. US-A-4 800 563 discloses detection of errors in instructions with rewriting of correct instruction, remedy being considered upon repeated error occurence.

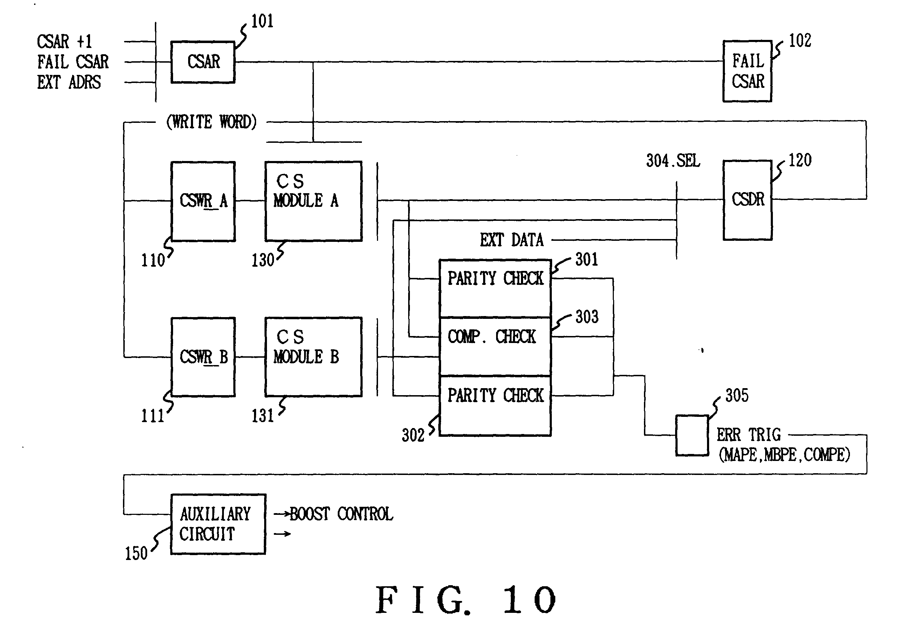

Fig. 10 shows another example of a recovery circuit.

In the figure, a control storage (CS) is divided into two modules, i.e., a control storage module A (CS module A) 130 and a control storage module B (CS module B), and common entry addresses are assigned to both of the control storage modules and common data are written in them. When data requested to be processed are read out, the same data are read from both control storage modules based on the entry address included in the request. Parity check and compare check are performed on the data read from each of the control storage modules, and this process is continued if the data from those modules agree with each other. On the other hand, if the data do not agree, the process is continued using the data from the module working properly.

In the control storage module wherein an error has occurred in the data output therefrom, correct data are copied from the control storage module which has output correct data into the entry address of the data in which the error has occurred. Such copying is performed at appropriate timing based on the state of the processing at the control processor. Therefore, according to the method shown in Fig. 10, there is no need for interrupting the process at the time of the occurrence of the error. This provides an advantage in that it is possible to prevent a delay in processing due to the occurrence of an error.

For a control system of the control processor, a hierarchical structure consisting of the interior of the control processor and subordinate control portions is employed. Specifically, the control processor transmits commands to the subordinate control portions which in turn execute specified processes by analyzing the commands.

In the recovery control shown in Fig. 9, however, although the control processor inhibits processes internal thereto when an error in CS is detected, it is difficult to inhibit the processes at the subordinate control portions at the same time. Further, there is another problem in that it is difficult to carry out retries when continuous data are transferred between the control processor and the subordinate control portions, i.e., when the control processors and the subordinate control portions are operated in synchronism.

On the other hand, in the recovery control shown in Fig. 10, since the control storage (CS) has a double structure, it requires a physical quantity twice that in the method shown in Fig. 9 to maintain the same number of words. With the same quantity as that in Fig. 9, only half the number of words in Fig 9 can be maintained. As a result, such a limit on the words places a limit on the range of functions that can be realized.

In addition, according to the methods shown in Fig. 9 and Fig. 10, it is difficult to deal with errors which occur in portions other than a control storage in a control processor.

It is an object of the present invention to provide an effective technique to be used in an information processing apparatus for increasing the number of words in micro-instructions handled by a control processor to be exclusively used for the execution of a RAS function with improved reliability and for performing a retry process on errors occurring in portions other than a control storage (CS).

In accordance with a first aspect of the invention there is provided a retry control method according to claim 1.

In accordance with a second aspect of the invention there is provided a retry controller according to claim 6.

The control processor may be for executing maintenance and management functions on an information processing apparatus through control portions subordinate thereto having a control interface with each of processing portions in the information processing apparatus.

### Retry Control Method for the Control Processor

A retry control method for the control processor according to an embodiment of the first aspect of the present invention includes the steps as follows which are to be executed by the control processor.
1. process request storing step
2. microinstruction outputting step
3. microinstruction executing step
4. error detecting step
5. error correcting step
6. storage position determining step
7. rewriting step
8. process retry step
9. process request executing step

The process request storing step (1) includes a process of temporarily storing a request for a process issued by another processing system in the information processing apparatus in a process request storing means.

The microinstruction outputting step (2) includes a process of reading the microinstruction associated with the request for a process stored in the process request storing means from a control storage means which stores microinstructions for controlling the execution of various process requests.

The microinstruction executing step (3) includes a process of executing the microinstruction output at the microinstruction outputting step.

The error detecting step (4) includes a process of analyzing the microinstruction output at the microinstruction outputting step to determine whether an error exists or not.

The error correcting step (5) is a step executed when an error is detected in the microinstruction at the error detecting step and includes a process of correcting the error portion of the microinstruction.

The storage position determining step (6) includes a process of determining the position in the control storage means where the microinstruction is stored.

The rewriting step (7) includes a process of accessing the storage position determined at the storage position determining step and rewriting the microinstruction corrected at the error correcting step therein.

The process retry step (8) includes a process of causing the control processor to retry the process of executing the request for a process.

The process request executing step (9) is a step executed when no error is detected in the microinstruction at the error detecting step and includes a process of executing the request for a process in accordance with the microinstruction.

The microinstruction executing step may include a step of determining whether a microinstruction output by the control storage means is an instruction to the subordinate control portions or not, a step of converting the microinstruction into the form of a command which can be processed by the subordinate control portions if the microinstruction is an instruction to the subordinate control portions and a step of issuing the converted microinstruction to the subordinate control portions.

The retry control method of the present invention may include a step of resetting the contents of the process request storing means when the execution of a request for a process has been properly completed.

Further, the retry control method of the present invention may include a process retry step for causing the control processor to retry the process of executing a request for a process when an error occurs during the execution of a microinstruction or during the execution of the microinstruction by the subordinate control portions.

In addition, the retry control method for the control processor may include a retry counting step, a process retry step and an error information step.

The retry counting step includes a process of counting the number of retries at the executing process.

The process retry step includes a process of referring to the number of retries counted at the retry counting step in retrying a process and retrying the process of executing the request for a process if the number of retries is less than a predetermined value.

The error information step includes a process of informing the processing systems of the occurrence of an error when the number of retries is equal to the predetermined value.

A retry control device for the control processor according to an embodiment of the second aspect of the present invention will now be described.

### Retry Control Device for the Control Processor

A retry control device for the control processor is formed by providing the control processor with a process request storing means, a state control means, a control storage means, an error detection/correction means, retry control means and a microinstruction executing means.

When a request for a process from another processing system is set in the process request storage means, it is recognized by the state control means.

Then, the state control means sequentially activates various portions of the control processor.

Specifically, the state control means first activates the control storage means.

The control storage means reads the microinstruction for controlling the execution of the process request word by word and transmits it to the microinstruction executing means.

The error detection/correction means checks the microinstruction read from the control storage means word by word to determine whether there is an error in the micro-instruction.

If the error detection/correction means detects no error in the microinstruction, i.e., if the microinstruction is correct data, the microinstruction is executed by the microinstruction executing means.

If the microinstruction is a command issued to the subordinate control portions, the microinstruction executing means analyzes the microinstruction to select the subordinate control portion to execute the command. Then, the microinstruction executing means converts the microinstruction into the form of a command which can be executed by the subordinate control portions and issues the converted command to the selected subordinate control portion.

Further, the state control means resets the contents of the process request storage means when the execution of the process request is properly completed, i.e., when the microinstruction for controlling the execution of the process request has been properly executed by the microinstruction executing means or the subordinate control portion.

On the other hand, if the error detection/correction means detects an error in the microinstruction, it informs the retry control means of the occurrence of the error.

Upon receipt of the error detection information from the error detection/correction means, the retry control means inhibits the execution of the microinstruction by the control processor or the subordinate control portion. Then, retry control means instructs the state control means to stop the operation of the control processor. Further, the retry control means instructs the error detection/correction means to correct the error portion of the microinstruction and, at the same time, determines the position in the control storage means wherein the microinstruction is stored. Thereafter, the retry control means accesses the control storage means and executes a recovery process to rewrite the corrected microinstruction therein.

When the recovery process is complete, the retry control means determines whether the contents of the process request storage means have been reset or not. In other words, it is determined whether the process according to the request for a process which has been interrupted at the detection of the error is stored in the process request storage means or not. If the contents of the process request storage means have not been reset, the execution of the request for a process is retried. Specifically, the retry control means instructs the state control means to retry the execution of the request for a process. Upon the receipt of the instruction for a retry at the execution of the request for a process, the state control means reactivates various portions of the control processor.

In the control processor, the control storage means sequentially reads the microinstruction for controlling the execution of the process request word by word and transmits it to the microinstruction executing means. Thus, the microinstruction executing means can retry the execution of the request for a process in accordance with the microinstruction.

On the other hand, if the request for a process for which the processing has been interrupted has already been erased from the process request storage means, i.e., the contents of the process request storage means have been reset, information on the occurrence of the error is sent to the processing system which has issued the request for a process.

When an error occurs during the execution of a microinstruction at the microinstruction executing means and a subordinate control portion, the retry control means is informed of the occurrence of such an error. In this case, the process of executing the request for a process is retried in the same manner as described above.

If the retry control means includes the retry counter, the retry counter is referred to before it is attempted to reactivate the control processor, and the control processor is reactivated only when the value in the counter is less than a predetermined value. When the counter value is equal to the predetermined value, the retry control means determines that the control processor can not retry the execution of the process and informs the requesting processing system of the occurrence of the error.

As described above, according to preferred embodiments of the present invention, the control processor can deal with Hamming code errors in microinstructions and hard errors in the control processor or the subordinate control portions. It is therefore possible to increase the number of the words of microinstructions handled by the control processor with improved reliability.

For a better understanding of the invention, and to show how the same may be carried into effect, reference will now be made, purely by way of example, to the accompanying drawings in which
Fig. 1 shows a configuration of a retry controller according to a first embodiment of the present invention.
Fig. 2 is a block diagram of a control processor according to the second embodiment.
Fig. 3 is a block diagram of a retry control register according to the second embodiment.
Fig. 4 is a flow chart showing processing steps of a control processor.
Fig. 5 is a flow chart showing a process of executing a microinstruction.
Fig. 6 is a flow chart showing a recovery process.
Fig. 7 is a flow chart showing a process retry process.
Fig. 8 is a block diagram of a previously proposed control processor.
Fig. 9 is a block diagram of a previously proposed recovery circuit.
Fig. 10 is a block diagram of another previously proposed recovery circuit

An embodiment of the present invention will now be described.

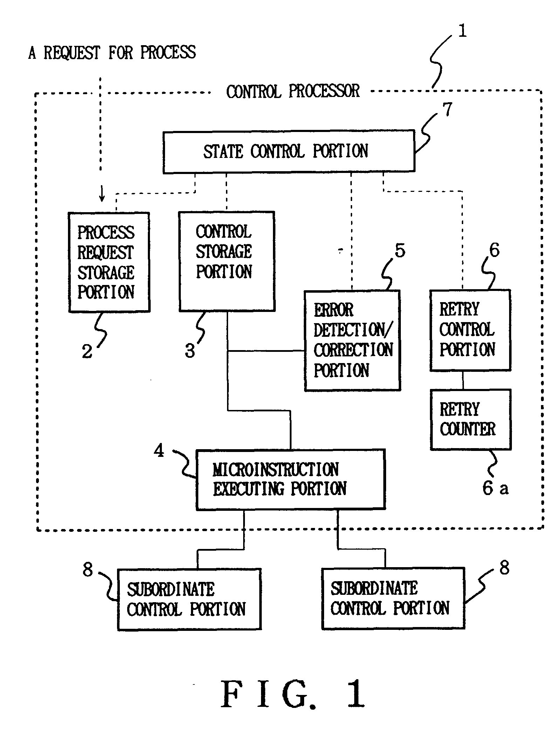

Fig. 1 shows a configuration of a retry controller for a control processor according to a first embodiment of the present invention.

The retry controller is constituted by providing a control processor 1 with a process request storage portion 2, a control storage portion 3, a microinstruction executing portion 4, an error detection/correction portion 5, a retry control portion 6 and a state control portion 7.

The process request storage portion 2 temporarily stores requests for processes received from other processing systems of an information processing apparatus and, specifically, a register is employed as this portion.

The control storage portion 3 is, for example, a control storage and stores microinstructions for controlling the processing of the requests for processes.

The microinstruction executing portion 4 executes the microinstructions for controlling the execution of the requests for processes.

The error detection/correction portion 5 checks microinstructions read from the control storage portion 3 into the microinstruction executing portion 4 word by word to determine whether there is an error or not. Further, the error detection/correction portion 5 has a function of correcting microinstructions including errors.

The retry control portion 6 controls the correcting operation of the error detection/correction portion 5 and rewrites the corrected microinstructions in the control storage portion 3. The retry control portion 6 further includes a function of outputting instructions for retries at the execution of the requests for processes to the state control portion 7.

The state control portion 7 controls the operational state of the control processor 1 by controlling the operation of various parts. Especially, the state control portion 7 has a function of causing the control processor 1 to retry the execution of a request for a process when it receives an instruction for a retry at the execution of the request for a process from the retry control portion 6.

The microinstruction executing portion 4 determines whether a microinstruction read from the control storage portion 3 is for the subordinate control portions 8 or not, selects the subordinate control portion 8 to execute the instruction by analyzing the microinstruction if the microinstruction is for the subordinate control portions 8 and issues the microinstruction to the subordinate control portion 8 after converting the microinstruction into a command format which can be processed by the subordinate control portion 8.

Further, the state control portion 7 resets the contents of the process request storage portion 2 when execution of the microinstruction for controlling execution of a request for a process has been properly completed.

Upon detection of a hardware error other than errors detected by the error detection/correction portion 5 or an error in the subordinate control portions 8, the retry control portion 6 issues an instruction for a retry at the execution process interrupted by the occurrence of the error to the state control portion 7. In this case, the retry control portion 6 refers to the contents of the process request storage portion 2 to determine whether the request for a process has been updated or not before issuing the retry instruction to the state control portion 7 and, if not updated yet, issues the instruction for a retry at the execution process for the request for a process to the state control portion 7.

In addition, the retry control portion 6 may include a function of registering error identification information for identifying attributes of errors. Such error identification information is information for making distinction between errors detected in a microinstruction by the error detection/correction portion 5, errors which occur when the microinstruction executing portion 4 executes a microinstruction and errors which occur when a subordinate control portion 8 executes a command associated with a microinstruction. Such error identification information is supplied to the retry control portion 6 by the part which has detected the error. Then, the retry control portion 6 performs the process associated with the attribute of the error with reference to the error identification information.

The retry control portion may include a retry counter 6a for counting the numbers of retries made on the process of executing a request for a process.

The retry controller according to the present invention will now be more specifically described.

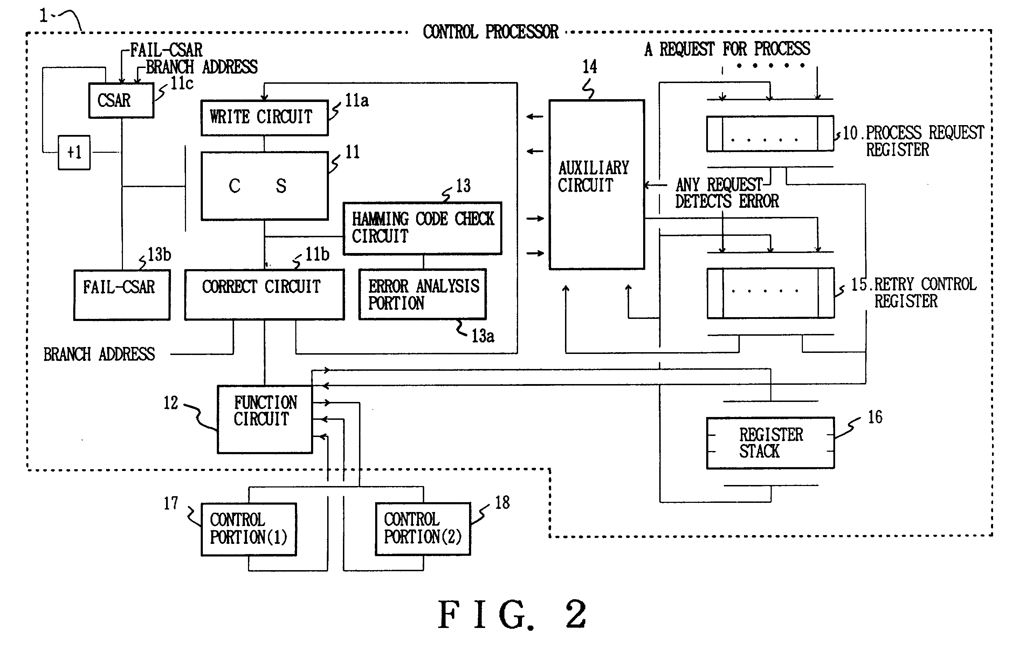

Fig. 2 is a block diagram of a control processor 1 according to a second embodiment of the present invention.

The control processor 1 includes a process request register 10 for storing requests for processes from other processing systems of an information processing apparatus on a bit basis, a control storage circuit (CS) 11 for storing microprograms for controlling execution of the requests for processes stored in the process request register 10, a function circuit 12 for executing the requests for processes in accordance with the microprograms in the control storage circuit (CS) 11, a Hamming code check circuit 13 for checking microinstructions transferred from the control storage circuit (CS) 11 to the function circuit 12 to determine whether there is an error or not, a retry control register 15 for registering error identification information for identifying the attribute of an error and an auxiliary circuit 14 for controlling the operation of each of these parts. Further, a control portion (1) 17 and a control portion (2) 18 are connected to the function circuit 12 through a control bus and a sensor bus. The number of such control portions may be determined as required.

The function of each of the above-described parts will now be described in detail.

The control storage circuit (CS) 11 serves as the control storage means of the present invention and includes a write circuit 11a, a read and correct circuit 11b and a CS address register (CSAR) 11c.

The control storage circuit 11 stores microprograms for controlling processes to be executed by the function circuit 12 to be described later and is constituted by a RAM (random access memory).

The write circuit 11a has a function of writing predetermined microprograms in addresses specified by the CS address register (CSAR) 11c.

The read an correct circuit 11b has a function of reading predetermined microinstructions from addresses specified by the CS address register (CSAR) 11c and, when there is an error of one bit in a microinstruction which has been read, it performs a function of correcting the data in the error portion.

The CS address register (CSAR) 11c is used to write and read microprograms in and from the control storage circuit (CS) 11 and specifies addresses to be accessed in the control storage circuit (CS) 11. Specifically, when it recognizes acceptance on a request for a process to the control processor 1, it sets an entry address for a microprogram in accordance with an instruction from the auxiliary circuit 14 to be described later. Thereafter, the auxiliary circuit 14 activates the control processor 1, and a transition from a stop state to an operating state occurs in the control processor 1. Then, the read and correct circuit 11b reads the microinstructions in accordance with the entry address set in the CS address register (CSAR) 11c.

With the control processor 1 in the executing state, the CS address register (CSAR) 11c increments the set entry address by one when it has read one microinstruction. That is, the control procedure for the microinstructions is defined in the direction in which the CS address increases.
In the case of an unconditional micro-branch-instruction, or in the case that the conditions for a conditional micro-branch-instruction have been satisfied, a branch address specified by the micro-branch-instruction is set in the CS address register (CSAR) 11c and the microprogram to be processed is switched. Such operations are repeated a transition to the stop state occurs in the control processor 1.

The function circuit 12 is a circuit which serves as the microinstruction executing means of the present invention and sequentially executes microinstructions read by the read and correct circuit 11b. The microinstructions are prepared to mainly function as:
1. arithmetic instructions for performing addition, subtraction, a comparison operation and a logic operation between two items of operand data in the register stack 16 and for storing the results in the register stack 16;
2. shift instructions for shifting one item of operand data in the register stack 16 and for storing the result in the register stack 16;
3. sense instructions for sensing various state flags of the process request register 10, retry control register 15, control portion (1) 17 and control portion (2) 18 through the sensor bus and for storing the results in the register stack 16;
4. control instructions for setting and resetting the various state flags of the process request register 10, retry control register 15, control portion (1) 17 and control portion (2) 18 through the control bus;
5. conditional instructions for executing microbranches based on the operational results of the arithmetic instructions and shift instructions; and
6. unconditional branch instructions for unconditionally executing microbranches.

The Hamming code check circuit 13 checks the normality of microinstructions read from the control storage circuit (CS) 11 word by word. This Hamming code check circuit 13 detects one-bit errors and two-bit errors in the microinstructions and, upon detection of a one-bit error, outputs a syndrome code indicating the position of the error bit. Further, this Hamming code check circuit 13 includes an error analysis portion 13a for providing the read and correct circuit 11b with information on the position of the error bit, i,e., information on the position of the bit to be corrected by decoding the syndrome code.

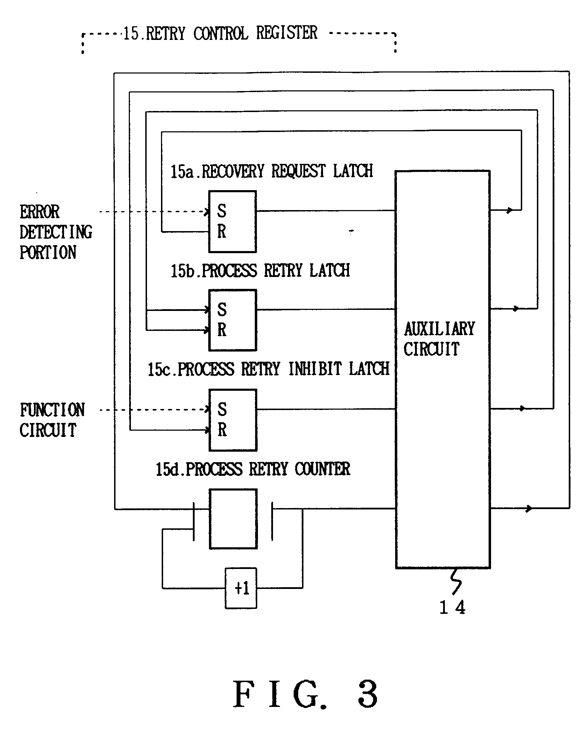

The retry control register 15 registers error identification information for identifying the attribute of an error at the time of the occurrence of the error, controls retries at the process of executing a request for a process and counts the number of the retries. Specifically, it is constituted by a recovery request latch 15a, a process retry latch 15b, a process retry inhibit latch 15c and a process retry counter 15d (see Fig. 3).

The recovery request latch 15a is for registering flags for identifying the occurrence of errors during Hamming code check in the words of microinstructions, parity errors in each register in the control processor 1 and hard errors in the control portion (1) 17 and the control portion (2) 18. This is set by the Hamming code check circuit 13, a parity error detection circuit (not shown) in the control processor 1 or hard error detection circuits (not shown) in the control portion (1) 17 and the control portion (2) 18 and is reset by the auxiliary circuit 14.

The process retry latch 15b is for registering flags for identifying the execution of process retries and set and reset by the auxiliary circuit 14.

The process retry inhibit latch 15c is for registering a flag for inhibiting process retries. It is set by the function circuit 12 when a microinstruction is executed and is reset by the auxiliary circuit 14. Specifically, when a predetermined process for executing a request for a process is retried in the control processor 1, the request for a process must be registered in the process request register 10, and the execution of a retry at the process is impossible after the process request register 10 is updated by a microprogram. In such a case, the function circuit 12 sets a flag for inhibiting a process retry in this process retry inhibit latch 15c.

The process retry counter 15d is a counter for counting the number of retries on a process, and its value is incremented and reset by the auxiliary circuit 14.

The register stack 16 is constituted by a plurality of result registers for storing the execution results of the function circuit 12 and a plurality of operand registers for storing operand data to be referred to during execution.

The auxiliary circuit 14 serves as the state control means of the present invention and has a function of controlling the operation of each of the above-described parts.

The operational steps of the control processor 1 according to the present embodiment will now be described.

The control processor 1 according to the present embodiment carries out common processing steps as described below.

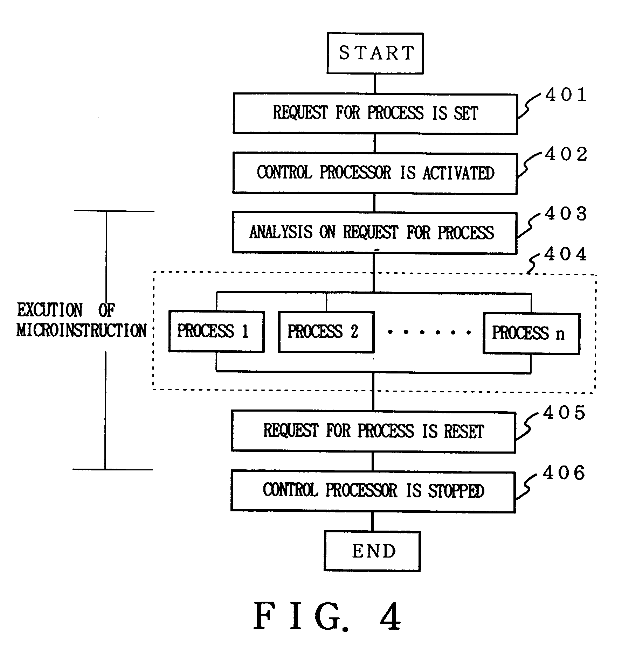

The control processor is normally in a stop state and is activated when a request for a process is set in the process request register 10. The operational steps from the activation up to the execution of the request for a process will be described with reference to the flow chart shown in Fig. 4.

The auxiliary circuit 14 recognizes that a request for a process from another processing system has been set in the process request register 10 (step 401) and activates various parts of the control processor 1 (step 402).

The control processor 1 sequentially executes microinstructions in accordance with instructions from the auxiliary circuit 14 to start microprogram control. Specifically, it senses the process request register 10 in accordance with a microprogram to analyze the request for a process (step 403). Then, it executes processes requested by the request for a process (step 404).

When the execution of the processes according to the request for a process has been properly completed, the control processor 1 resets the process request flag in the process request register 10 (step 405). The auxiliary circuit 14 then executes a microinstruction to stop the control processor 1 (step 406).

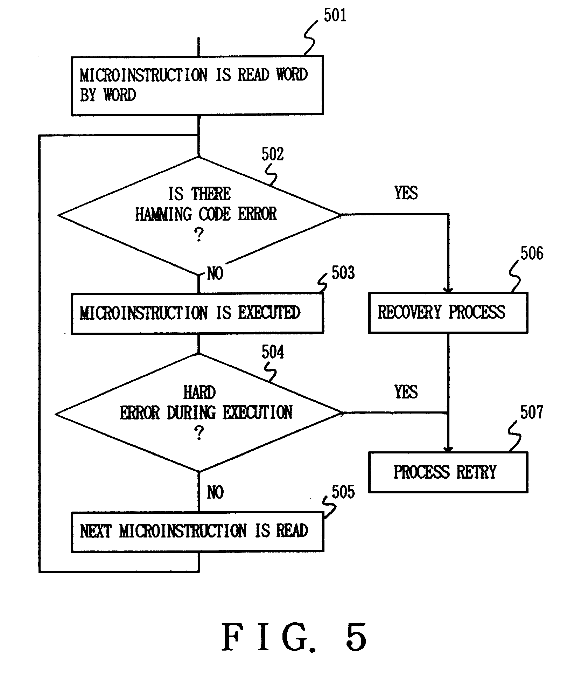

The process of executing microinstructions at the above-described steps 403, 404 and 405 will now be described with reference to the flow chart in Fig. 5.

When the control processor 1 is activated, the auxiliary circuit 14 instructs the CS address register (CSAR) 11c of the address of a microinstruction to be executed in the control storage circuit (CS) 11. In accordance with the instruction from the auxiliary circuit 14, the CS address register (CSAR) 11c sets the address of the microinstruction to be executed. The control storage portion 11 reads the microinstruction in accordance with the address set in the CS address register (CSAR) 11c (step 501).

The microinstruction transmitted from the control storage circuit (CS) 11 is transferred to the read and correct circuit 11b after being subjected to error check by the Hamming code check circuit 13. At this time, the Hamming code check circuit 13 checks the microinstruction transmitted from the control storage circuit (CS) 11 to determine whether there is a Hamming code error in the microinstruction or not (step 502). If not, the read and correct circuit 11b informs the function circuit 12 of the microinstruction.

The function circuit 12 then executes this microinstruction, If this microinstruction is to be executed by the control portion (1) 17 and the control portion (2) 18, they are caused to execute the microinstruction (step 503).

When the function circuit 12 or the control portion (1) 17 and the control portion (2) 18 properly complete the execution of this microinstruction, the auxiliary circuit 14 instructs the CS address register (CSAR) 11c to update the CS address, and the control processor 1 reads the next microinstruction (step 505).

On the other hand, if the Hamming code check circuit 13 detects a one-bit error or two-bit error in the above-described microinstruction at the step 502, the auxiliary circuit 14 interrupts the process performed by the control processor 1 to perform a recovery process on the Hamming code error (step 506).

When the recovery process on the Hamming code error is complete, the control processor 1 retries the execution of the process interrupted due to the Hamming code error (step 507).

If there is a hard error during the execution of the above-described microinstruction at the function circuit 12 or the control portion (1) 17 and the control portion (2) 18 at the step 504, the auxiliary circuit 14 interrupts the process performed by the control processor 1 and then causes it to retry to execute the interrupted process (step 507).

When the above-described process is performed in actual hardware, the execution of the microinstruction and the readout of the next microinstruction are overlapped to improve the processing performance of the control processor 1.

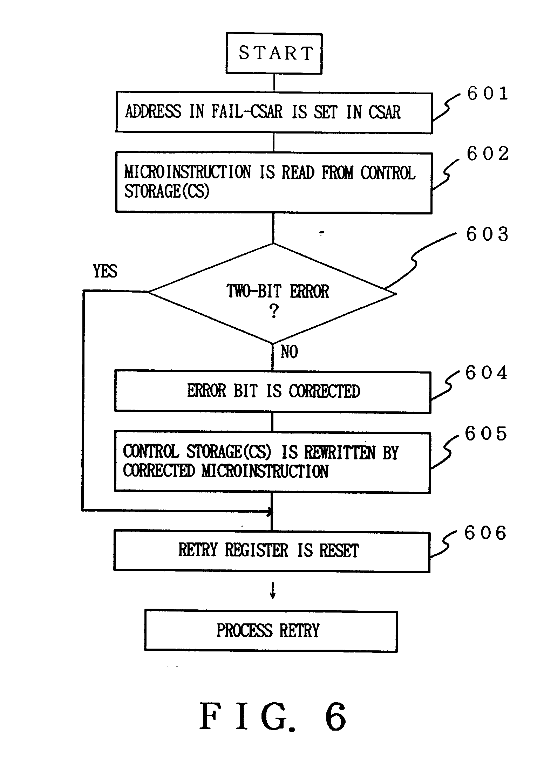

The steps of the recovery process at the step 506 will now be described with reference to the flow chart in Fig. 6.

In the control processor 1 according to the present embodiment, the CS addresses set in the CS address register (CSAR) 11c are stored in a FAIL address register (FAIL-CSAR) 13b.

If a Hamming code error is detected in the microinstruction at step 502, the Hamming code check circuit 13 sets a flag in the recovery request latch 15a of the retry control register 15. When the flag is set in the recovery request latch 15a, the auxiliary circuit 14 removes the CS address of the microinstruction to be recovered from the FAIL address register (FAIL-CSAR) 13b and sets it again in the CS address register (CSAR) 11c (step 601).

The error analysis portion 13a of the Hamming code check circuit 13 determines information on the position of the error bit in the microinstruction and supplies this information to the read and correct circuit 11b.

The read and correct circuit 11b reads the microinstruction at the address instructed by the CS address register (CSAR) 11c, i.e., the microinstruction in which the error has occurred from the control storage circuit (CS) 11 and determines whether the Hamming code error is a one-bit error or a two-bit error (steps 602 and 603).

Only if the Hamming code error is a one-bit error, the read and correct circuit 11b corrects the error bit in the microinstruction to obtain the correct data bit based on the error bit position information supplied by the error analysis portion 13a (step 604). On the other hand, if the Hamming code error is a two-bit error, no correction process is performed.

The read and correct circuit 11b transfers the corrected microinstruction to the write circuit 11a.

Upon receipt of the microinstruction transferred from the read and correct circuit 11b, the write circuit 11a performs write access to the control storage circuit (CS) 11 in accordance with the address set in the CS address register (CSAR) 11c. In the control storage circuit (CS) 11, the microinstruction which has been stored in the CS address register is rewritten into the microinstruction received from the read and correct circuit 11b (step 605).

Upon completion of the rewriting process of the microinstruction, the auxiliary circuit 14 resets the error identification flag associated with the error in the microinstruction in the recovery request latch 15a (step 606). When the above-described recovery process is complete, the auxiliary circuit 14 activates a process to retry execution of the request for a process which has been interrupted due to the error in the microinstruction.

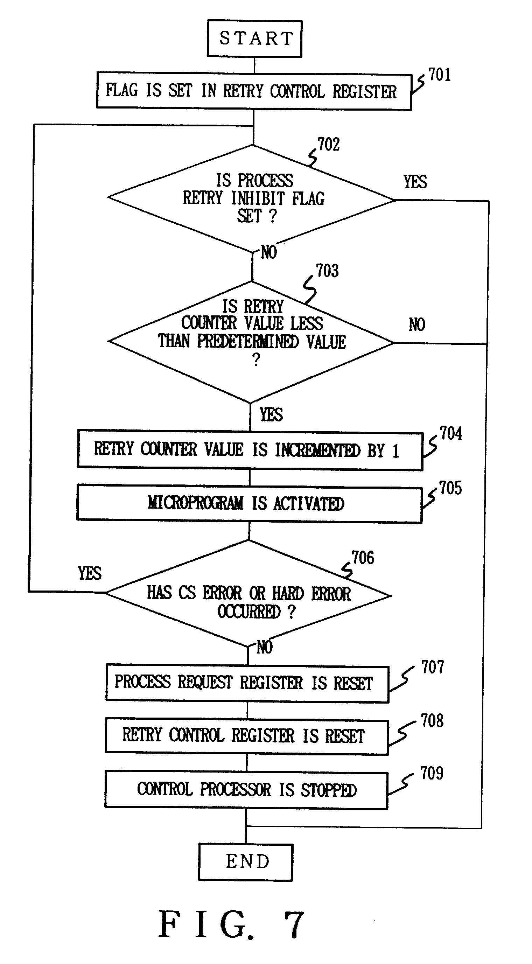

Fig. 7 shows operational steps of the control processor 1 during the retry process.

In activating the retry process, the auxiliary circuit 14 sets a flag indicating a process retry execution state in the process retry latch 15b of the retry control register 15 (step 701).

Then, the auxiliary circuit 14 refers to the state of the process retry inhibit latch 15c to determine whether a process retry is permitted or not (step 702).

If a process retry inhibit flag is not set in the process retry inhibit latch 15c, the auxiliary circuit 14 refers to the value in the process retry counter 15d and determines whether the value in this counter is less than a predetermined value or not (step 703).

If the value in the process retry counter 15d is less than a predetermined value, the auxiliary circuit 14 increments the value in the process retry counter 15d by one (step 704).

Next, the auxiliary circuit 14 activates the control processor 1 to reactivate the process interrupted due to the occurrence of the error, i.e. the process of executing the microprogram for controlling the execution of the request for a process set in the process request register 10 (step 705).

Thereafter, microinstructions are sequentially read and the processes specified by the microinstructions are executed by the function circuit 12 or the control portion (1) 17 and the control portion (2) 18. If another error is detected by the Hamming code check circuit 13, the control circuit 9, or the control portion (1) 17 and the control portion (2) 18 (step 706), the processes as described above are repeated until the microprogram for controlling the execution of the relevant request for a process is properly executed or until the value in the process retry counter 15d reaches a predetermined value.

When the microprogram for controlling the execution of the relevant request for a process is properly executed, the auxiliary circuit 14 resets the process request flag in the process request register 10 z(step 707) and resets the process retry latch 15b of the retry control register 15 (step 708).

In addition, the auxiliary circuit 14 executes a microinstruction to stop the operation of the control processor 1 (step 709).

The function of the process retry counter 15d allows a process retry also in the case that there are Hamming code errors in a plurality of words in the control storage circuit (CS) 11.

While this invention has been described with respect to the preferred embodiments thereof, it will be understood by those skilled in the art that various changes in detail may be made therein without departing from the scope of the invention as defined in the appended claims.

## Claims

1. A retry control method for a control processor for performing maintenance and management functions on an information processing apparatus through control portions subordinate thereto having a control interface with each of processing portions in said information processing apparatus, wherein said control processor executes:
a process request storing step for temporarily storing a request for a process issued by another processing system in said information processing apparatus in a process request storing means;
a microinstruction outputting step for outputting a microinstruction associated with said request for a process from a control storage means which stores microinstructions for controlling the execution of said request for a process;
a microinstruction executing step for executing the microinstruction output at said microinstruction outputting step;
an error detecting step for analyzing the microinstruction output at said microinstruction outputting step to determine whether an error exists or not;
an error correcting step for correcting an error portion detected in said microinstruction;
a storage position determining step for determining the position in said control storage means where said micro- instruction is stored;
a rewriting step for accessing the storage position determined at said storage position determining step and rewriting the microinstruction corrected at said error correcting step therein;
a process retry step for causing said control processor to retry the process of executing said request for a process; and
a process request executing step for executing said request for a process in accordance with said microinstruction if no error is detected in said microinstruction at said error detecting step.

2. The retry control method for a control processor according to Claim 1, wherein said microinstruction executing step includes:
a step of determining whether a microinstruction output by said control storage means is an instruction to said subordinate control portions or not;
a step of converting said microinstruction into a command format which can be processed by said subordinate control portions if said microinstruction is an instruction to said subordinate control portions; and
a step of issuing said converted microinstruction to said subordinate control portions.

3. The retry control method for a control processor according to Claim 1 or 2 comprising a step of resetting the contents of said process request storing means when the execution of said request for a process has been properly completed.

4. The retry control method for a control processor according to Claim 1, 2 or 3, comprising a process retry step for causing said control processor to retry the process of executing said request for a process when an error occurs during the execution of said microinstruction or during the execution of said microinstruction by said subordinate control portions.

5. The retry control method for a control processor according to Claim 1, 2, 3 or 4 comprising;
a retry counting step for counting the number of retries of said executing process;
a process retry process for referring to the number of retries counted at said retry counting step in retrying said process and for retrying the process of executing said request for a process if said number of retries is less than a predetermined value; and
an error information step for informing said processing system of the occurrence of an error when said number of retries is equal to the predetermined value.

6. A retry controller for a control processor for performing maintenance and management functions on an information processing apparatus through control portions subordinate thereto having a control interface with each of processing portions in said information processing apparatus, comprising:
a process request storing means for temporarily storing a request for a process issued by another processing system in said information processing apparatus;
a state control means for activating said control processor when a request for a process is written in said process request storing means;
a control storage means for storing a microinstruction for controlling the execution of each request for a process and for outputting the microinstruction associated with said request for a process when the control processor is activated;
an error detection/correction means for analyzing the microinstruction output by said control storage means to determine whether there is an error or not and for correcting an error portion if any;
a retry control means for determining the position in said control storage means where said microinstruction is stored if an error is detected by said error detection/ correction means to rewrite the microinstruction corrected by said error detection/correction means therein and for causing said control processor to retry the process of executing said request for a process; and
a microinstruction executing means for executing said request for a process in accordance with said microinstruction if there is no error in said microinstruction.

7. The retry controller for a control processor according to Claim 6, wherein, in executing a microinstruction output by said control storage means, said microinstruction executing means determines whether said microinstruction is an instruction to said subordinate control portions, converts said microinstruction into a command format which can be processed by said subordinate control portions if said microinstruction is an instruction to said subordinate control portions and causes said subordinate control portions to execute the converted microinstruction.

8. The retry controller for a control processor according to Claim 6, or claim 7, wherein said state control means resets the contents of said process request storage means when the execution of said request for a process has been properly completed.

9. The retry controller for a control processor according to Claim 6, 7 or 8, wherein said retry control means causes said control processor to retry the process of executing said request for a process when an error occurs during the execution of said microinstruction or during the execution of said microinstruction by said subordinate control portions.

10. The retry controller for a control processor according to Claim 6,7, 8 or 9, wherein said retry control means includes a retry counter for counting the number of retries at said executing process, refers to the value in said retry counter in retrying said process, causes a retry at the process of executing said request for a process if said counter value is less than a predetermined value and
informs said processing system of the occurrence of an error when said counter value is equal to the predetermined value.

## Patentansprüche

1. Wiederholungssteuerverfahren für einen Steuerprozessor zum Ausführen von Wartungs- und Verwaltungsfunktionen an einer Informationsverarbeitungsvorrichtung durch ihm untergeordnete Steuerabschnitte, die eine Steuerschnittstelle mit jedem der Verarbeitungsabschnitte in der Informationsverarbeitungsvorrichtung haben, bei dem der Steuerprozessor ausführt:
einen Prozeßanforderungsspeicherschritt zum temporären Speichern einer Anforderung eines Prozesses, die durch ein anderes Verarbeitungssystem in der Informationsverarbeitungsvorrichtung ausgegeben wurde, in einem Prozeßanforderungsspeichermittel;
einen Mikroinstruktionsausgabeschritt zum Ausgeben einer Mikroinstruktion, die der genannten Anforderung eines Prozesses zugeordnet ist, von einem Steuerspeichermittel, welches Mikroinstruktionen zum Steuern der Ausführung der Anforderung eines Prozesses speichert;
einen Mikroinstruktionausführschritt zum Ausführen der Mikroinstruktion, die bei dem Mikroinstruktionsausgabeschritt ausgegeben wurde;
einen Fehlerdetektionsschritt zum Analysieren der Mikroinstruktion, die bei dem Mikroinstruktionsausgabeschritt ausgegeben wurde, um zu bestimmen, ob ein Fehler vorhanden ist oder nicht;
einen Fehlerkorrekturschritt zum Korrigieren eines Fehlerabschnittes, der in der genannten Mikroinstruktion detektiert wurde;
einen Speicherpositionsbestimmungsschritt zum Bestimmen der Position in dem Steuerspeichermittel, an der die genannte Mikroinstruktion gespeichert ist;
einen Rückchreibschritt zum Zugreifen auf die Speicherposition, die bei dem Speicherpositionsbestimmungsschritt bestimmt wurde, und zum Rückschreiben der Mikroinstruktion, die bei dem Fehlerkorrekturschritt korrigiert wurde, an ihr;
einen Prozeßwiederholungsschritt zum Bewirken, daß der Steuerprozessor den Prozeß zum Ausführen der genannten Anforderung eines Prozesses wiederholt; und
einen Prozeßanforderungsausführschritt zum Ausführen der genannten Anforderung eines Prozesses gemäß der genannten Mikroinstruktion, falls bei dem Fehlerdetektionsschritt kein Fehler in der genannten Mikroinstruktion detektiert wurde.

2. Wiederholungssteuerverfahren für einen Steuerprozessor nach Anspruch 1, bei dem der Mikroinstruktionsausführschritt enthält:
einen Schritt zum Bestimmen, ob eine Mikroinstruktion, die durch das Steuerspeichermittel ausgegeben wurde, eine Instruktion für die untergeordneten Steuerabschnitte ist oder nicht;
einen Schritt zum Konvertieren der Mikroinstruktion in ein Befehlsformat, das durch die untergeordneten Steuerabschnitte verarbeitet werden kann, falls die Mikroinstruktion eine Instruktion für die untergeordneten Steuerabschnitte ist; und
einen Schritt zum Ausgeben der konvertierten Mikroinstruktion an die untergeordneten Steuerabschnitte.

3. Wiederholungssteuerverfahren für einen Steuerprozessor nach Anspruch 1 oder 2, mit einem Schritt zum Zurücksetzen des Inhaltes des Prozeßanforderungsspeichermittels, wenn die Ausführung der genannten Anforderung eines Prozesses korrekt vollendet worden ist.

4. Wiederholungssteuerverfahren für einen Steuerprozessor nach Anspruch 1, 2 oder 3, mit einem Prozeßwiederholungsschritt zum Bewirken, daß der Steuerprozessor den Prozeß zum Ausführen der genannten Anforderung eines Prozesses wiederholt, wenn ein Fehler während der Ausführung der genannten Mikroinstruktion oder während der Ausführung der genannten Mikroinstruktion durch die untergeordneten Steuerabschnitte auftritt.

5. Wiederholungssteuerverfahren für einen Steuerprozessor nach Anspruch 1, 2, 3 oder 4, mit:
einem Wiederholungszählschritt zum Zählen der Anzahl von Wiederholungen des Ausführungsprozesses;
einem Prozeßwiederholungsprozeß zum Konsultieren der Anzahl von Wiederholungen, die bei dem Wiederholungszählschritt beim Wiederholen des genannten Prozesses gezählt wurde, und zum Wiederholen des Prozesses zum Ausführen der genannten Anforderung eines Prozesses, falls die genannte Anzahl von Wiederholungen kleiner als ein vorbestimmter Wert ist; und
einem Fehlerinformationsschritt zum Informieren des Verarbeitungssystems über das Auftreten eines Fehlers, wenn die genannte Anzahl von Wiederholungen gleich dem vorbestimmten Wert ist.

6. Wiederholungscontroller für einen Steuerprozessor zum Ausführen von Wartungs- und Verwaltungsfunktionen an einer Informationsverarbeitungsvorrichtung durch ihm untergeordnete Steuerabschnitte, die eine Steuerschnittstelle mit jedem der Verarbeitungsabschnitte in der Informationsverarbeitungsvorrichtung haben, mit:
einem Prozeßanforderungsspeichermittel zum temporären Speichern einer Anforderung eines Prozesses, die durch ein anderes Verarbeitungssystem in der Informationsverarbeitungsvorrichtung ausgegeben wurde;
einem Zustandssteuermittel zum Aktivieren des Steuerprozessors, wenn eine Anforderung eines Prozesses in das Prozeßanforderungsspeichermittel geschrieben wurde;
einem Steuerspeichermittel zum Speichern einer Mikroinstruktion zum Steuern der Ausführung von jeder Anforderung eines Prozesses und zum Ausgeben der Mikroinstruktion, die der genannten Anforderung eines Prozesses zugeordnet ist, wenn der Steuerprozessor aktiviert ist;
einem Fehlerdetektions-/-korrekturmittel zum Analysieren der Mikroinstruktion, die durch das Steuerspeichermittel ausgegeben wurde, um zu bestimmen, ob ein Fehler vorhanden ist oder nicht, und zum Korrigieren eines Fehlerabschnittes, falls vorhanden;
einem Wiederholungssteuermittel zum Bestimmen der Position in dem Steuerspeichermittel, an der die Mikroinstruktion gespeichert ist, falls ein Fehler durch das Fehlerdetektions-/-korrekturmittel detektiert wurde, um die Mikroinstruktion, die durch das Fehlerdetektions-/-korrekturmittel korrigiert wurde, an ihr umzuschreiben, und zum Bewirken, daß der Steuerprozessor den Prozeß zum Ausführen der genannten Anforderung eines Prozesses wiederholt; und
einem Mikroinstruktionsausführmittel zum Ausführen der genannten Anforderung eines Prozesses gemäß der genannten Mikroinstruktion, falls in der genannten Mikroinstruktion kein Fehler vorhanden ist.

7. Wiederholungscontroller für einen Steuerprozessor nach Anspruch 6, bei dem beim Ausführen einer Mikroinstruktion, die durch das Steuerspeichermittel ausgegeben wurde, das Mikroinstruktionsausführmittel bestimmt, ob die Mikroinstruktion eine Instruktion für die untergeordneten Steuerabschnitte ist, die Mikroinstruktion in ein Befehlsformat konvertiert, das durch die untergeordneten Steuerabschnitte verarbeitet werden kann, falls die Mikroinstruktion eine Instruktion für die untergeordneten Steuerabschnitte ist, und bewirkt, daß die untergeordneten Steuerabschnitte die konvertierte Mikroinstruktion ausführen.

8. Wiederholungscontroller für einen Steuerprozessor nach Anspruch 6 oder Anspruch 7, bei dem das Zustandssteuermittel den Inhalt des Prozeßanforderungsspeichermittels zurücksetzt, wenn die Ausführung der genannten Anforderung eines Prozesses korrekt vollendet worden ist.

9. Wiederholungscontroller für einen Steuerprozessor nach Anspruch 6, 7 oder 8, bei dem das Wiederholungssteuermittel bewirkt, daß der Steuerprozessor den Prozeß zum Ausführen der genannten Anforderung eines Prozesses wiederholt, wenn ein Fehler während der Ausführung der genannten Mikro instruktion oder während der Ausführung der genannten Mikro instruktion durch die untergeordneten Steuerabschnitte auftritt.

10. Wiederholungscontroller für einen Steuerprozessor nach Anspruch 6, 7, 8 oder 9, bei dem das Wiederholungssteuermittel einen Wiederholungszähler zum Zählen der Anzahl von Wiederholungen bei dem Ausführungsprozeß enthält, den Wert in dem Wiederholungszähler beim Wiederholen des genannten Prozesses konsultiert, eine Wiederholung bei dem Prozeß zum Ausführen der genannten Anforderung eines Prozesses bewirkt, falls der genannte Zählerwert kleiner als ein vorbestimmter Wert ist, und das Verarbeitungssystem über das Auftreten eines Fehlers informiert, wenn der genannte Zählerwert gleich dem vorbestimmten Wert ist.

## Revendications

1. Procédé de commande de tentative de relance pour un processeur de commande pour réaliser des fonctions de maintenance et de gestion sur un appareil de traitement d'informations via des parties de commande subordonnées à celui-ci ayant une interface de commande avec chacune des parties de traitement dans ledit appareil de traitement d'informations, dans lequel ledit processeur de commande exécute :
une étape de mémoire de demande de traitement pour stocker temporairement une demande de traitement émis par un autre système de traitement dans ledit appareil de traitement d'informations dans un moyen de mémoire de demande de traitement ;
une étape de fourniture de micro-instruction pour fournir une micro-instruction associée à ladite demande de traitement à partir d'un moyen de mémoire de commande qui stocke des micro-instructions pour commander l'exécution de ladite demande de traitement ;
une étape d'exécution de micro-instruction pour exécuter la micro-instruction fournie à ladite étape de fourniture de micro-instruction ;
une étape de détection d'erreur pour analyser la micro-instruction fournie à ladite étape de fourniture de micro-instruction pour déterminer si une erreur existe ou non ;
une étape de correction d'erreur pour corriger une partie d'erreur détectée dans ladite micro-instruction ;
une étape de détermination de position de mémoire pour déterminer la position dans ledit moyen de mémoire de commande où ladite micro-instruction est stockée ;
une étape de réécriture pour accéder à la position de mémoire prédéterminée à ladite étape de détermination de position de mémoire et pour réécrire la micro-instruction corrigée à ladite étape de correction d'erreur dans celle-ci ;
une étape de tentative de relance de traitement pour provoquer par ledit processeur de commande une tentative de relance du traitement de l'exécution de ladite demande de traitement ;
une étape d'exécution de traitement pour exécuter ladite demande de traitement selon ladite micro-instruction s'il n'y a pas d'erreur détectée dans ladite micro-instruction à ladite étape de détection d'erreur.

2. Procédé de commande de tentative de relance pour un processeur de commande selon la revendication 1, dans lequel ladite étape d'exécution de micro-instruction comprend :
une étape de détermination si une sortie de micro-instruction par ledit moyen de mémoire de commande est une instruction auxdites parties de commande subordonnées ou non ;
une étape de conversion de ladite micro-instruction dans un format de commande qui peut être traité par lesdites parties de commande subordonnées si ladite micro-instruction est une instruction pour lesdites parties de commande subordonnées ;
une étape d'émission de ladite micro-instruction convertie auxdites parties de commande subordonnées.

3. Procédé de commande de tentative de relance pour un processeur de commande selon la revendication 1 ou 2 comprenant une étape de mise à 0 du contenu du moyen de mémoire de demande de traitement lorsque l'exécution de ladite demande de traitement a été correctement terminée.

4. Procédé de commande de tentative de relance pour un processeur de commande selon la revendication 1, 2 ou 3, comprenant une étape de tentative de relance de traitement pour contraindre ledit processeur de commande à tenter la relance de traitement d'exécution de ladite demande de traitement lorsqu'une erreur se produit pendant l'exécution de ladite micro-instruction ou pendant l'exécution de ladite micro-instruction par lesdites parties de commande subordonnées.

5. Procédé de commande de tentative de relance pour un processeur de commande selon la revendication 1, 2, 3 ou 4 comprenant :
une étape de comptage de tentative de relance pour compter le nombre de tentatives de relance dudit traitement d'exécution ;
un traitement de tentative de relance de traitement pour se reporter au nombre de tentatives de relance compté à ladite étape de comptage de tentative de relance dans la tentative de relance dudit traitement et pour tenter la relance du traitement de l'exécution de ladite demande de traitement si ledit nombre de tentative de relance est plus petit qu'une valeur prédéterminée ; et
une étape d'informations d'erreur pour informer ledit système de traitement de l'occurrence d'une erreur lorsque ledit nombre de tentative de relance est égal à une valeur prédéterminée.

6. Dispositif de commande de tentative de relance pour un processeur de commande pour réaliser des fonctions de maintenance et de gestion sur l'appareil de traitement d'informations via des parties de commande subordonnées à celle-ci ayant une interface de commande avec chacune des parties de traitement dans ledit appareil de traitement d'informations, comprenant :
un moyen de commande d'état pour activer ledit processeur de commande lorsqu'une demande de traitement est écrite dans ledit moyen de mémoire de demande de traitement ;
un moyen de mémoire de commande pour stocker des micro-informations pour commander l'exécution de chaque demande de traitement et pour fournir la micro-instruction associée à ladite demande de traitement lorsque le processeur de commande est activé ;
un moyen de détection/correction d'erreur pour analyser la micro-instruction fournie par ledit moyen de mémoire de commande pour déterminer s'il y a une erreur ou non et pour corriger une partie d'erreur s'il y en a une ;
un moyen de commande de tentative de relance pour déterminer la position dans ledit moyen de mémoire de commande où ladite micro-instruction est stockée si une erreur est détectée par ledit moyen de détection/correction d'erreur pour réécrire la micro-instruction corrigée par ledit moyen de détection/correction d'erreur dans celle-ci et pour contraindre ledit processeur de commande à tenter la relance du traitement de l'exécution de ladite demande de traitement ; et
un moyen d'exécution de micro-instruction pour exécuter ladite demande de traitement selon ladite micro-instruction s'il n'y a pas d'erreur dans ladite micro-instruction.

7. Dispositif de commande de tentative de relance pour un processeur de commande selon la revendication 6, dans lequel, dans l'exécution d'une micro-instruction fournie par ledit moyen de mémoire de commande, ledit moyen d'exécution de micro-instruction détermine si ladite micro-instruction est une instruction auxdites parties de commande subordonnées, convertit ladite micro-instruction en un format de commande qui peut être traité par lesdites parties de commande subordonnées si ladite micro-instruction est une instruction auxdites parties de commande subordonnées et provoque par lesdites parties de commande subordonnées l'exécution de la micro-instruction convertie.

8. Dispositif de commande de tentative de relance pour un processeur de commande selon la revendication 6 ou la revendication 7, dans lequel ledit moyen de commande d'état met à 0 le contenu dudit moyen de mémoire de demande de traitement lorsque l'exécution de ladite demande de traitement a été correctement terminée.

9. Dispositif de commande de tentative de relance pour un processeur de commande selon la revendication 6, 7 ou 8, dans lequel ledit moyen de commande de tentative de relance provoque par ledit processeur de commande de la tentative de relance du traitement de l'exécution de ladite demande de traitement lorsqu'une erreur se produit pendant l'exécution de ladite micro-instruction ou pendant l'exécution de ladite micro-instruction par lesdites parties de commande subordonnées.

10. Dispositif de commande de tentative de relance pour un processeur de commande selon la revendication 6, 7, 8 ou 9 dans lequel ledit moyen de commande de tentative de relance comprend un compteur de tentatives de relance pour compter le nombre de tentatives de relance lors dudit traitement d'exécution, se réfère à la valeur dans ledit compteur de tentatives de relance lors de la tentative de relance dudit traitement, provoque une tentative de relance de traitement de l'exécution de ladite demande de traitement si ladite valeur de compteur est inférieure à une valeur prédéterminée et informe ledit système de traitement de l'occurrence d'une erreur lorsque ladite valeur de compteur est égale à la valeur prédéterminée.
